# EUROPÄISCHE PATENTANMELDUNG

(11) **EP 3 254 751 A1**
(43) Veröffentlichungstag der Anmeldung: **13.12.2017**
(21) Anmeldenummer: 16173499.1
(22) Anmeldetag: 08.06.2016
(51) Int. Cl.: B01J 19/30

(54) **FÜLLKÖRPER**

(71) Anmelder: Vereinigte Füllkörper-Fabriken GmbH & Co. KG, 56235 Ransbach-Baumbach (DE)
(72) Erfinder: Schwämmlein, Kurt, 55545 Bad Kreuznach (DE)
(74) Vertreter: Quermann, Helmut

(57) **Zusammenfassung**

Die Erfindung betrifft einen Füllkörper (1), insbesondere für Stoff- und/oder Wärmeaustauschkolonnen, die von einer Gas- und/oder Flüssigkeitsströmung durchsetzt werden. Der Füllkörper (1) weist zwei einander abgewandte Hauptausdehnungsflächen (3, 4) auf, die gekrümmt ausgebildet sind. Den Füllkörper (1) durchsetzen mehrere Durchgangskanäle (6) von der einen Hauptausdehnungsfläche (3) in Richtung der anderen Hauptausdehnungsfläche (4), wobei zumindest einer der Durchgangskanäle (6) einen sich in Richtung der einen Hauptausdehnungsfläche (3) verändernden Querschnitt aufweist.

## Beschreibung

Die Erfindung betrifft einen Füllkörper, insbesondere für Stoff- und/oder Wärmeaustauschkolonnen, die von einer Gas- und/oder Flüssigkeitsströmung durchsetzt werden, wobei der Füllkörper zwei einander abgewandte Hauptausdehnungsflächen aufweist, die gekrümmt ausgebildet sind, und der Füllkörper mehrere den Füllkörper von der einen Hauptausdehnungsfläche in Richtung der anderen Hauptausdehnungsfläche durchsetzende Durchgangskanäle aufweist.

Es ist bekannt, Füllkörper verschiedener Ausführungsformen als regellose Schüttungen in Kolonnen, Reaktoren und ähnlichen Apparaten einzusetzen. Technische Anwendungen sind beispielsweise gegeben bei thermischen, chemischen oder physikalischen Verfahren wie Absorption, Desorption (Strippung), Destillation, Rektifikation, Extraktion, direkter Gaskühlung, regenerativer Verbrennung, katalytischer Stoffumwandlung und anderen verfahrenstechnischen Trennprozessen, bei denen verschiedene Phasen bzw. Medien effektiv in Kontakt gebracht werden sollen.

Die Füllkörper vergrößern die Oberfläche in dem von ihnen ausgefüllten Volumen und intensivieren dadurch den Stoff- bzw. Wärmeaustausch zwischen den verschiedenen Phasen bzw. Medien innerhalb dieses Volumens. Die Phasengrenzfläche für den Stoffübergang stimmt in der Regel nicht exakt mit der geometrischen Füllkörperoberfläche überein, sondern ist vielmehr die Summe aus der während des Prozesses benetzten Füllkörperoberfläche und der Oberflächensumme aller sich im Füllkörperbett bildenden Tropfen.

Ferner dienen Füllkörper bzw. Füllkörperschüttungen der Abscheidung kleiner und kleinster Flüssigkeitströpfchen bis hin zur Abscheidung von sogenannten Aerosolen. Auch finden Füllkörper als Aufwuchsfläche für einen Biofilm in biologischen Anlagen und als Tropfkörper in Wäschern Anwendung.

Das durch die Füllkörper gebildete Füllkörperbett weist gegenüber der Strömung der Phasen einen bestimmten Druckverlust auf. Dieser hängt vom Gasbelastungsfaktor, der Berieselungsdichte, dem Füllkörpertyp, der Füllkörpergröße, der geometrischen Gestaltung des Füllkörpers und weiteren Parametern ab.

Die Füllkörper müssen für alle Anwendungen eine geeignete mechanische Stabilität und eine geeignete Oberfläche aufweisen, sowie eine gute Durchmischung der verschiedenen Phasen oder Medien erzeugen, ohne der Strömung der Phasen oder Medien jedoch einen zu großen Druckverlust entgegenzusetzen. Das für den jeweiligen Trennprozess oder chemischen bzw. thermischen Prozess notwendige Schüttvolumen soll so gering wie möglich sein.

In der Regel muss ein geeigneter Kompromiss zwischen den entgegengesetzt verlaufenden Anforderungen, wie zum Beispiel geringer Druckverlust bei möglichst großer Füllkörperoberfläche, gefunden werden.

Ein Füllkörper mit zwei einander abgewandten Hauptausdehnungsflächen, wobei die eine Hauptausdehnungsfläche und die andere Hauptausdehnungsfläche gleichsinnig gekrümmt ausgebildet sind, und mit mehreren den Füllkörper von der einen Hauptausdehnungsfläche in Richtung der anderen Hauptausdehnungsfläche durchsetzenden Durchgangskanälen ist aus der Druckschrift US 4 537 731 A bekannt. Der in der vorgenannten Druckschrift offenbarte Füllkörper ist dabei sattelförmig ausgebildet. Der Füllkörper besteht aus mehreren ersten zueinander parallel angeordneten, nach der einen Seite hin bogenförmig gekrümmten Rippen und mehreren zweiten zueinander parallel, zu den ersten Rippen senkrecht angeordneten, nach der gegenüberliegenden Seite hin bogenförmig gekrümmten Rippen sowie aus zwei die Endbereiche der ersten Rippen miteinander verbindenden bogenförmig gekrümmten Verbindungsstegen. Die Rippen sind scharfkantig ausgebildet.

Aufgabe der vorliegenden Erfindung ist es, einen Füllkörper mit zwei einander abgewandten Hauptausdehnungsflächen, die gekrümmt ausgebildet sind, und mit mehreren den Füllkörper von der einen Hauptausdehnungsfläche in Richtung der anderen Hauptausdehnungsfläche durchsetzenden Durchgangskanälen so weiterzubilden, dass dieser sich durch ein Optimum hinsichtlich niedrigem Druckverlust und geeignet großer Fläche auszeichnet. Ferner soll eine besonders gute Durchmischung von Medien, die den Füllkörper bzw. ein durch diese Füllkörper gebildetes Füllkörperbett durchströmen, für den Stoffaustausch bzw. Wärmeaustausch erreicht werden.

Gelöst wird die Aufgabe durch einen Füllkörper, der gemäß den Merkmalen des Patentanspruchs 1 ausgebildet ist.

Der Füllkörper weist zwei einander abgewandte Hauptausdehnungsflächen auf, wobei die eine Hauptausdehnungsfläche und die andere Hauptausdehnungsfläche gekrümmt ausgebildet sind. Der Füllkörper weist ferner mehrere den Füllkörper von der einen Hauptausdehnungsfläche in Richtung der anderen Hauptausdehnungsfläche durchsetzende Durchgangskanäle auf, wobei zumindest einer der Durchgangskanäle einen sich in Richtung der einen Hauptausdehnungsfläche verändernden Querschnitt aufweist.

Durch die Veränderung des Querschnitts des Durchgangskanals wird ein in Richtung der einen Hauptausdehnungsfläche einströmendes Fluid innerhalb des Durchgangskanals aufgrund des sich verändernden Querschnitts umgelenkt. Dadurch werden die Strömungsgeschwindigkeit und die Strömungsrichtung des den Füllkörper durchströmenden Fluids lokal variiert, wodurch eine besonders gute Durchmischung bei niedrigem Druckverlust erreicht wird.

Vorzugsweise sind die eine Hauptausdehnungsfläche und die andere Hauptausdehnungsfläche gleichsinnig oder gegensinnig gekrümmt ausgebildet. Die gleichsinnige Krümmung kann beispielsweise dadurch gebildet sein, dass die eine Hauptausdehnungsfläche eine konvexe und die andere Hauptausdehnungsfläche eine konkave Krümmung aufweist. Die gegensinnige Krümmung kann beispielsweise dadurch gebildet sein, dass beide Hauptausdehnungsflächen eine konkave Krümmung aufweisen.

In einer bevorzugten Ausführungsform weist der Durchgangskanal einen sich in Richtung der einen Hauptausdehnungsfläche erweiternden oder verjüngenden Querschnitt auf. Durch eine derartige Gestaltung des Durchgangskanals kann besonders effektiv die lokale Geschwindigkeit des den Füllkörper durchströmenden Fluids beeinflusst und/oder ein lokaler Druckgradient des Fluids erzeugt werden.

In diesem Zusammenhang wird es als besonders vorteilhaft angesehen, wenn der Füllkörper einen Durchgangskanal mit einem sich in Richtung der einen Hauptausdehnungsfläche erweiternden Querschnitt und einen anderen Durchgangskanal mit einem sich in Richtung der einen Hauptausdehnungsfläche verjüngenden Querschnitt aufweist.

Um eine besonders hohe mechanische Stabilität des Füllkörpers zu gewährleisten, weist der Füllkörper in einer bevorzugten Ausführungsform zwei gegenüberliegende Außenwandungen auf, wobei die jeweilige Außenwandung in einem Randbereich der Hauptausdehnungsflächen und zwischen den beiden Hauptausdehnungsflächen ausgebildet ist. In diesem Zusammenhang ist insbesondere vorgesehen, dass die zwei Außenwandungen identisch, insbesondere U-förmig ausgebildet und vorzugsweise parallel angeordnet sind.

Gemäß einer bevorzugten Weiterbildung der Erfindung ist vorgesehen, dass der Füllkörper zumindest eine Innenwandung aufweist, wobei ein im Bereich zwischen den beiden Hauptausdehnungsflächen ausgebildeter erster Innenwandungsabschnitt zwei aneinander angrenzende Durchgangskanäle trennt. Zum einen wird durch diese Innenwandung die mechanische Stabilität des Füllkörpers erhöht und zum anderen eine große Oberfläche bei geringem Druckverlust erreicht.

Vorzugsweise durchsetzt die Innenwandung zumindest eine der Hauptausdehnungsflächen und/oder eine der Außenwandungen, wobei der außenliegende Teilbereich der Innenwandung einen zweiten Innenwandungsabschnitt bildet. Dabei ist insbesondere vorgesehen, dass der erste Innenwandungsabschnitt und der zweite Innenwandungsabschnitt einer Innenwandung gewinkelt zueinander ausgebildet sind, wodurch das durch den Strömungskanal strömende Fluid beim Austritt aus dem Durchgangskanal durch den zweiten Innenwandungsabschnitt umgelenkt wird.

Als besonders vorteilhaft wird es angesehen, wenn der Füllkörper mehrere Innenwandungen aufweist, wobei zwei einander gegenüberliegende Innenwandungen und/oder Innenwandungsabschnitte zueinander gewinkelt ausgebildet sind.

In einer bevorzugten Ausführungsform der Erfindung ist die Außenwandung und/oder die Innenwandung gewölbt und/oder gewinkelt und/oder verdrillt gestaltet.

Um eine nachteilige Verformung des Füllkörpers bei mechanischer Belastung zu verhindern, weist der Füllkörper in einer bevorzugten Ausführungsform mindestens einen Verbindungssteg, vorzugsweise mehrere Verbindungsstege auf. Zwecks Stabilisierung verbindet der Verbindungssteg die eine Außenwandung mit der anderen Außenwandung und/oder die eine Innenwandung mit einer anderen Innenwandung und/oder die Innenwandung mit einer der Außenwandungen.

Um eine Bildung von Abtropfstellen bei einer den Füllkörper benetzenden Flüssigkeit zu begünstigen, weist der Füllkörper an einer der Hauptausdehnungsflächen und/oder an einer der Außenwandungen einen nach außen gerichteten Vorsprung, vorzugsweise mehrere Vorsprünge auf.

Um die Bildung von Abtropfstellen zu begünstigen, ist es durchaus denkbar, dass die Oberfläche des Füllkörpers eine Profilierung aufweist, die ein Ablaufen der den Füllkörper benetzenden Flüssigkeit in Richtung der Vorsprünge begünstigt.

Um eine besonders effektive Bildung von Abtropfstellen zu erreichen, sind die Vorsprünge in einer bevorzugten Ausführungsform des Füllkörpers nach außen verjüngend, insbesondere nach außen spitz zulaufend ausgebildet.

Eine besonders einfache Gestaltung des Füllkörpers mit einem Vorsprung wird erreicht, wenn der Vorsprung durch den zweiten Innenwandungsabschnitt gebildet ist.

Um die effektive Oberfläche des Füllkörpers zu erhöhen, ist es durchaus denkbar, dass die Oberfläche des Füllkörpers, insbesondere die Oberfläche der Innenwandung und/oder der Außenwandung, zumindest teilweise profiliert gestaltet ist.

Um ein möglichst geringes Gewicht und eine möglichst offene Struktur zu erreichen, sind die Innenwandung und/oder die Außenwandung vorzugsweise dünnwandig gestaltet.

Vorzugsweise ist der Füllkörper aus Kunststoff oder Metall hergestellt. Es ist aber auch durchaus denkbar, dass der Füllkörper aus Keramik besteht.

Weitere Merkmale der Erfindung sind in der nachfolgenden Beschreibung der Figuren sowie den Figuren selbst dargestellt, wobei bemerkt wird, dass alle Einzelmerkmale und alle Kombinationen von Einzelmerkmalen erfindungswesentlich sind.

In den Figuren ist die Erfindung anhand von zwei bevorzugten Ausführungsformen dargestellt, ohne hierauf beschränkt zu sein.

Die Figuren zeigen:
Fig. 1 für die erste Ausführungsform einen Füllkörper in einer Ansicht gemäß dem Pfeil I in Fig. 3,
Fig. 2 den Füllkörper in einer Ansicht gemäß dem Pfeil II in Fig. 1,
Fig. 3 den Füllkörper in einer Ansicht gemäß dem Pfeil III in Fig. 1,
Fig. 4 den Füllkörper gemäß Fig. 1 in einer perspektivischen Darstellung,
Fig. 5 für die zweite Ausführungsform einen Füllkörper in einer Stirnansicht gemäß dem Pfeil V in Fig. 6,
Fig. 6 den Füllkörper in einer Draufsicht gemäß dem Pfeil VI in Fig. 5,
Fig. 7 den Füllkörper in einer Schnittdarstellung gemäß der Linie VII - VII in Fig. 6,
Fig. 8 den Füllkörper gemäß Fig. 5 in einer perspektivischen Darstellung

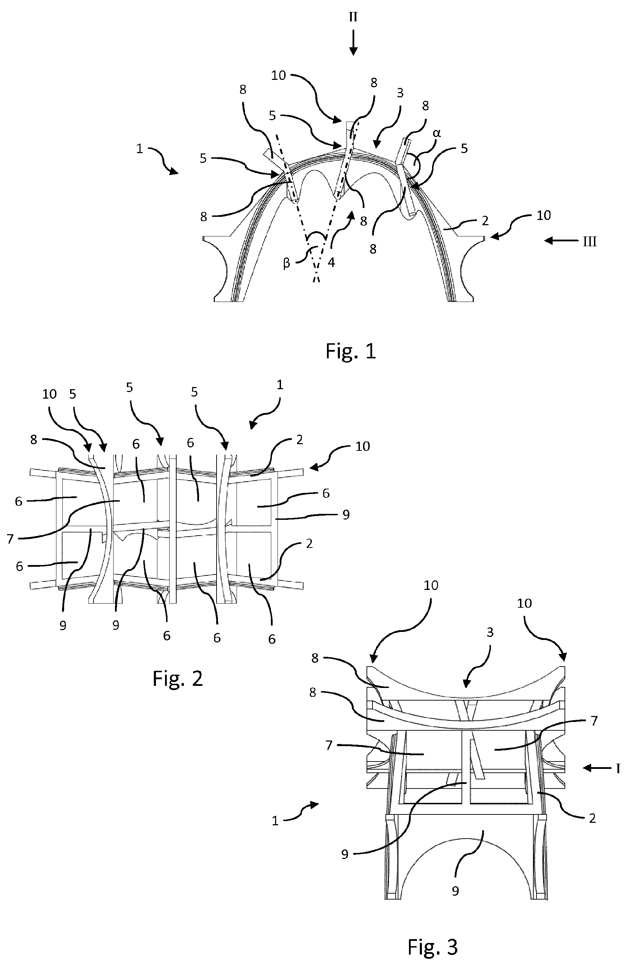

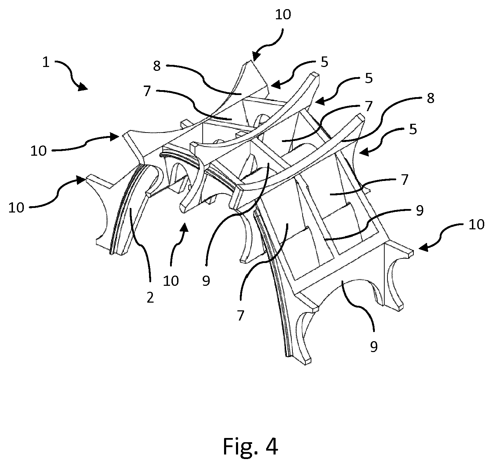

Der zur ersten Ausführungsform in den Fig. 1 bis 4 veranschaulichte Füllkörper 1 findet mit einer Vielzahl entsprechender Füllkörper 1 Verwendung in einer regellosen Schüttung. Der Füllkörper 1 weist zwei einander abgewandte Hauptausdehnungsflächen 3, 4 auf, wobei die eine Hauptausdehnungsfläche 3 eine konvexe Krümmung und die andere Hauptausdehnungsfläche 4 eine konkave Krümmung aufweist und folglich die eine Hauptausdehnungsfläche 3 und die andere Hauptausdehnungsfläche 4 gleichsinnig gekrümmt ausgebildet sind.

Zwischen den beiden Hauptausdehnungsflächen 3, 4 sind zwei gegenüberliegende, identisch ausgebildete, zueinander parallele Außenwandungen 2 ausgebildet, wobei die jeweilige Außenwandung 2 in einem Randbereich der Hauptausdehnungsflächen 3, 4 ausgebildet sind.

Der Füllkörper 1 weist acht, den Füllkörper 1 von der einen Hauptausdehnungsfläche 3 in Richtung der anderen Hauptausdehnungsfläche 4 durchsetzende Durchgangskanäle 6 auf.

Wie insbesondere der Fig. 2 zu entnehmen ist, verändert sich ein Querschnitt des jeweiligen Durchgangskanals 6 in Richtung der einen Hauptausdehnungsfläche, wobei der Füllkörper 1 sowohl Durchgangskanäle 6 mit einem sich in Richtung der einen Hauptausdehnungsfläche 3 erweiternden als auch Durchgangskanäle 6 mit einem sich in Richtung der einen Hauptausdehnungsfläche 3 verjüngenden Querschnitt aufweist.

Der Füllkörper 1 weist ferner drei im Wesentlichen senkrecht zu den beiden Außenwandungen 2 ausgebildete Innenwandungen 5 auf, wobei ein zwischen den beiden Hauptausdehnungsflächen 3, 4 ausgebildeter ersten Innenwandungsabschnitt 7 der jeweiligen Innenwandung 5 zwei aneinander angrenzende Durchgangskanäle 6 trennt.

Die jeweilige Innenwandung 5 durchsetzt die eine Hauptausdehnungsfläche 3 sowie die beiden Außenwandungen 2, wobei durch den außenliegenden Teilbereich der Innenwandung 5 ein zweiter Innenwandungsabschnitt 8 gebildet ist.

Der jeweilige die Außenwandung 2 bzw. die Hauptausdehnungsfläche 3 durchsetzende Teilbereich der Innenwandung 5 bildet folglich einen nach außen hervorstehenden und mit der Außenwandung 2 verbundenen Abschnitt des Füllkörpers 1 und kann somit auch als Abschnitt der Außenwandung 2 aufgefasst werden.

Die von der Außenwandung 2 hervorstehenden, zweiten Innenwandungsabschnitte 8 und die Innenwandungsabschnitte 7 einer jeweiligen Innenwandung 5 sind in der gleichen Ebene angeordnet.

Der von der einen Hauptausdehnungsfläche 3 nach außen hervorstehende zweite Innenwandungsabschnitt 8 ist gewinkelt, somit nicht parallel zu dem ersten Innenwandungsabschnitt 7 und gewinkelt zu dem von der Außenwandung 2 hervorstehenden zweiten Innenwandungsabschnitt 8 ausgebildet. Dies ist insbesondere der Fig. 1 zu entnehmen. Der Winkel α zwischen den Innenwandungsabschnitten 7, 8 bzw. zwischen den beiden zweiten Innenwandungsabschnitten 8 beträgt vorzugsweise 120° bis 170°.

Ferner sind auch die jeweiligen ersten Innenwandungsabschnitte 7 und zweiten Innenwandungsabschnitte 8 der Innenwandungen 5 zueinander gewinkelt ausgebildet, wobei durch die zueinander gewinkelten ersten Innenwandungsabschnitte 7 der sich erweiternde bzw. verjüngende Querschnitt der Durchgangskanäle 6 gebildet ist. Der Winkel β zwischen den Innenwandungsabschnitten 7 beträgt vorzugsweise 20° bis 50°.

Die beiden Außenwandungen 2 sind mittels zweier, im Wesentlichen senkrecht zu den Außenwandungen 2 verlaufender Verbindungsstege 9 miteinander verbunden. Des Weiteren weist der Füllkörper 1 vier, zu den Außenwandungen 2 im Wesentlichen parallel verlaufende Verbindungsstege 9 auf, wobei jeweils einer der Verbindungsstege 9 zwei Innenwandungen 5 miteinander verbindet und jeweils einer der Verbindungsstege 9 eine der Innenwandungen 5 mit einem der senkrecht zu den Außenwandungen 2 verlaufenden Verbindungsstege 9 verbindet.

Die Innenwandungen 5 und die beiden Außenwandungen 2 sind dünnwandig gestaltet, wobei der Füllkörper 1 aufgrund der netzartigen Anordnung der Außenwandungen 2, der Innenwandungen 5 und der Verbindungsstege 9 eine sehr stabile und dennoch sehr offene, Struktur aufweist, sodass ein geringer Druckverlust und ein geringes Eigengewicht des Füllkörpers 1 gewährleistet ist.

Der Füllkörper 1 weist an den beiden Hauptausdehnungsflächen 3, 4 sowie an den Außenwandungen 2 mehrere nach außen gerichtete Vorsprünge 10 auf. Dabei sind einige der nach außen gerichteten Vorsprünge 10 durch den zweiten Innenwandungsabschnitt 8 gebildet. Die Vorsprünge 10 sind dabei im Wesentlichen spitz zulaufend gestaltet.

Vorzugsweise ist der Füllkörper aus Kunststoff oder Metall hergestellt. Es ist aber auch durchaus denkbar, dass der Füllkörper aus Keramik besteht.

Durch die konvexe Krümmung der einen Hauptausdehnungsfläche 3 und die konkave Krümmung der anderen Hauptausdehnungsfläche 4 ist der mögliche Umfang einer Flächenberührung zwischen den Füllkörpern 1 in einer regellosen Schüttung vermindert, wodurch ein Optimum hinsichtlich niedrigem Druckverlust und geeignet großer Oberfläche für einen Stoffaustausch bzw. einen Wärmeaustausch sichergestellt ist.

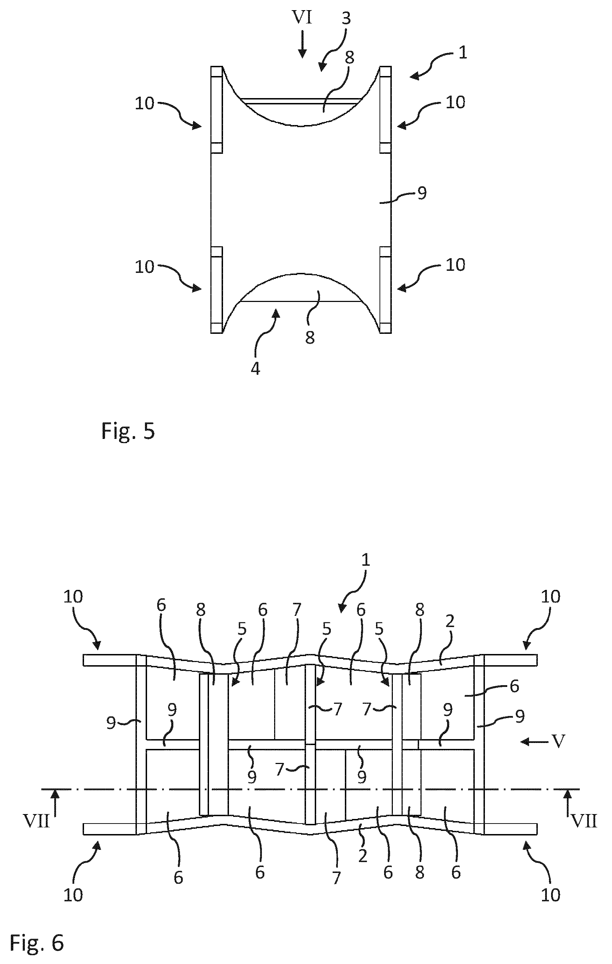

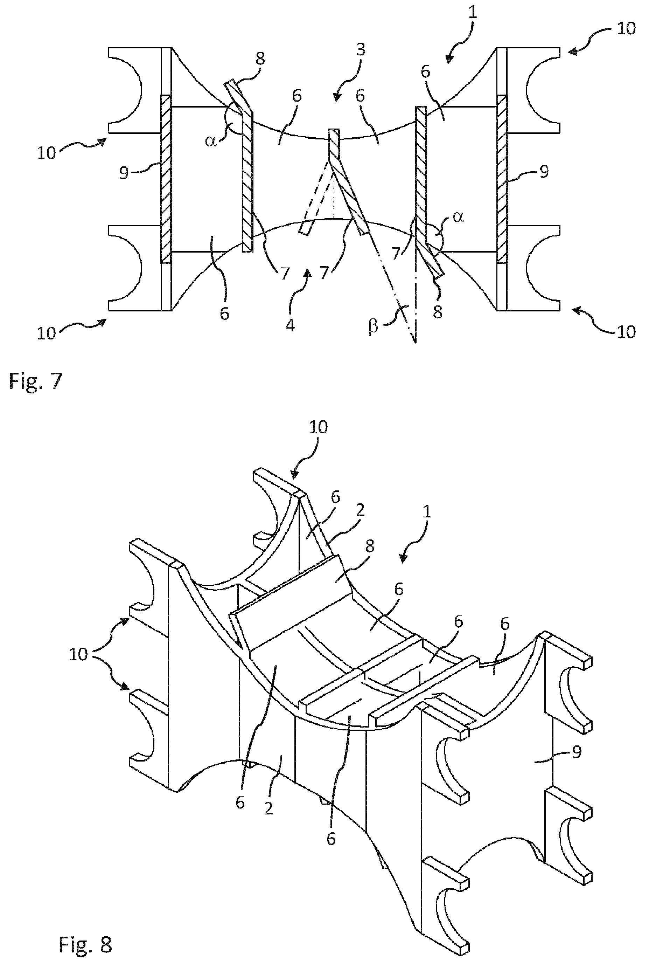

Die Fig. 5 - 8 zeigen die zweite Ausführungsform des Füllkörpers 1, wobei sich dieser von dem nach der ersten Ausführungsform grundsätzlich dadurch unterscheidet, dass die beiden Hauptausdehnungsflächen 3, 4 gegensinnig gekrümmt sind, konkret die beiden Hauptausdehnungsflächen 3, 4 jeweils eine konkave Krümmung aufweisen.

Für beide Ausführungsformen sind entsprechende Komponenten mit denselben Bezugszeichen bezeichnet.

In der zweiten Aufführungsform sind die beiden äußeren der drei Innenwandungen 5 mit parallel zueinander angeordneten ersten Innenwandungsabschnitten 7 versehen. Hingegen ist der Innenwandungsabschnitt 7, der zwischen diesen beiden Innenwandungsabschnitten 7 angeordnet ist, abgewinkelt ausgebildet. Dies in zwei Abschnitten, von denen der eine Abschnitt parallel zu den Innenwandungsabschnitten 7 der beiden diesen einschließenden Innenwandungen 5 angeordnet ist, während der zweite Abschnitt nicht parallel verläuft, so dass hierdurch der zugeordnete Durchgangskanal 6 in Richtung der anderen Hauptausdehnungsfläche 4 einen sich im Sinne einer Verjüngung verändernden Querschnitt aufweist. So sind innerhalb des Füllkörpers 1 zwei Durchgangskanäle 6 gebildet, deren Querschnitt sich in Richtung der anderen Hauptausdehnungsfläche 4 verjüngt. Alle anderen Querschnittskanäle 6 weisen im Bereich der ersten Innenwandungsabschnitte 7 und gegebenenfalls mit diesen zusammenwirkenden Verbindungsstegen 9 einen konstanten Querschnitt auf. Die zwei äußeren, somit stirnseitig des Füllkörpers 1 angeordneten Paare von Durchgangskanälen 6 bewirken gleichfalls eine Veränderung des Querschnitts in einer Verjüngung zur einen Hauptausdehnungsfläche 7 beziehungsweise der anderen Hauptausdehnungsfläche 4 hin, infolge des unter dem Winkel α abgewinkelten zweiten Innenwandungsabschnitt 8, der mit dem benachbarten Verbindungssteg 9 zusammenwirkt.

Die nach außen gerichteten Vorsprünge 10 sind identisch ausgebildet und paarweise angeordnet, wobei diese Vorsprünge 10 im Bereich der stirnseitig angeordneten Verbindungsstege 9 positioniert sind.

### Bezugszeichenliste

- 1: Füllkörper
- 2: Außenwandung
- 3: Hauptausdehnungsfläche
- 4: Andere Hauptausdehnungsfläche
- 5: Innenwandung
- 6: Durchgangskanal
- 7: Erster Innenwandungsabschnitt
- 8: Zweiter Innenwandungsabschnitt
- 9: Verbindungssteg
- 10: Vorsprung
- α: Winkel
- β: Winkel

## Patentansprüche

1. Füllkörper (1), insbesondere für Stoff- und / oder Wärmeaustauschkolonnen, die von einer Gas- und / oder Flüssigkeitsströmung durchsetzt werden, wobei der Füllkörper (1) zwei einander abgewandte Hauptausdehnungsflächen (3, 4) aufweist, die gekrümmt ausgebildet sind, und der Füllkörper (1) mehrere den Füllkörper (1) von der einen Hauptausdehnungsfläche (3) in Richtung der anderen Hauptausdehnungsfläche (4) durchsetzende Durchgangskanäle (6) aufweist, **dadurch gekennzeichnet, dass** zumindest einer der Durchgangskanäle (6) einen sich in Richtung der einen Hauptausdehnungsfläche (3) verändernden Querschnitt aufweist.

2. Füllkörper (1) nach Anspruch 1, **dadurch gekennzeichnet, dass** zumindest einer der Durchgangskanäle (6) einen sich in Richtung der einen Hauptausdehnungsfläche (3) erweiternden oder verjüngenden Querschnitt aufweist.

3. Füllkörper (1) nach Anspruch 2, **dadurch gekennzeichnet, dass** der Füllkörper (1) einen Durchgangskanal (6) mit einem sich in Richtung der einen Hauptausdehnungsfläche (3) erweiternden Querschnitt und einen anderen Durchgangskanal (6) mit einem sich in Richtung der einen Hauptausdehnungsfläche (3) verjüngenden Querschnitt aufweist.

4. Füllkörper nach einem der Ansprüche 1 bis 3, **dadurch gekennzeichnet, dass** der Füllkörper (1) zwei gegenüberliegende Außenwandungen (2), insbesondere zwei identisch ausgebildete Außenwandungen (2) aufweist, wobei die jeweilige Außenwandung (2) in einem Randbereich der Hauptausdehnungsflächen (3, 4) und zwischen den beiden Hauptausdehnungsflächen (3, 4) ausgebildet ist.

5. Füllkörper (1) nach einem der Ansprüche 1 bis 4, **dadurch gekennzeichnet, dass** der Füllkörper (1) zumindest eine Innenwandung (5) aufweist, wobei ein im Bereich zwischen den beiden Hauptausdehnungsflächen (3, 4) ausgebildeter Innenwandungsabschnitt (7) zwei aneinander angrenzende Durchgangskanäle (6) trennt.

6. Füllkörper (1) nach Anspruch 5, **dadurch gekennzeichnet, dass** die Innenwandung (5) zumindest eine der Hauptausdehnungsflächen (3, 4) und/oder eine der Außenwandungen (2) durchsetzt, wobei der außenliegende Teilbereich der Innenwandung (5) einen zweiten Innenwandungsabschnitt (8) bildet.

7. Füllkörper (1) nach Anspruch 5 oder 6, **dadurch gekennzeichnet, dass** der Füllkörper (1) mehrere Innenwandungen (5) aufweist, wobei zwei einander gegenüberliegende Innenwandungen (5) und/oder Innenwandungsabschnitte (7, 8) zueinander gewinkelt ausgebildet sind.

8. Füllkörper (1) nach einem der Ansprüche 4 bis 7, **dadurch gekennzeichnet, dass** die Außenwandung (2) und/oder die Innenwandung (5) gewölbt, und/oder gewinkelt und/oder verdrillt gestaltet ist.

9. Füllkörper (1) nach einem der Ansprüche 4 bis 8, **dadurch gekennzeichnet, dass** der Füllkörper (1) mindestens einen Verbindungssteg (9) aufweist, wobei der Verbindungssteg (9) die eine Außenwandung (2) mit der anderen Außenwandung (2) und/oder die eine Innenwandung (5) mit einer anderen Innenwandung (5) oder die Innenwandung (5) mit einer der Außenwandungen (2) verbindet.

10. Füllkörper (1) nach einem der Ansprüche 1 bis 9, **dadurch gekennzeichnet, dass** der Füllkörper (1) an einer der Hauptausdehnungsflächen (3, 4) und/oder an einer der Außenwandungen (2) einen nach außen gerichteten Vorsprung (10), vorzugsweise mehrere Vorsprünge (10), aufweist.

11. Füllkörper (1) nach Anspruch 10, **dadurch gekennzeichnet, dass** der Vorsprung (10) sich nach außen verjüngend, insbesondere nach außen spitz zulaufend ausgebildet ist.

12. Füllkörper (1) nach 10 oder 11, **dadurch gekennzeichnet, dass** der Vorsprung (10) durch den zweiten Innenwandungsabschnitt (8) gebildet ist.

13. Füllkörper (1) nach einem der Ansprüche 1 bis 12, **dadurch gekennzeichnet, dass** die Oberfläche des Füllkörpers (1), insbesondere die Oberfläche der Innenwandung (5) und/oder der Außenwandung (2), zumindest teilweise profiliert gestaltet ist.

14. Füllkörper (1) nach einem der Ansprüche 1 bis 13, **dadurch gekennzeichnet, dass** die eine Hauptausdehnungsfläche (3) und die andere Hauptausdehnungsfläche (4) gleichsinnig oder gegensinnig gekrümmt ausgebildet sind.

15. Füllkörper (1) nach einem der Ansprüche 1 bis 14, **dadurch gekennzeichnet, dass** der Füllkörper (1) aus Kunststoff, Metall oder Keramik besteht.
